# EUROPEAN PATENT APPLICATION

(11) **EP 2 378 316 A1**
(43) Date of publication of application: **19.10.2011**
(21) Application number: 10159943.9
(22) Date of filing: 14.04.2010
(51) Int. Cl.: G01V 3/10

(54) **Inductive sensor whose output is independent of the type of detectable metallic material**

(71) Applicant: M.d. Micro Detectors S.p.a., 41122 Modena (IT)
(72) Inventor: Del Monte, Mauro, 41121, Modena (IT)
(74) Representative: Modiano, Micaela Nadia

(57) **Abstract**

An inductive sensor which uses two resonant LC circuits, one of reference and the other for measurement. The measurement inductor (2) is arranged close to the active surface of the sensor. The reference inductor (4) is shielded so that it is influenced less or not at all by the metallic body, but can follow the variations caused by the environmental temperature on the measurement inductor. The two LC circuits are excited by way of distinct pulses, so as to produce similar dampened oscillations, which are slightly different in terms of amplitude and phase. The reference oscillation can be elaborated to obtain a reference amplitude at a precise instant or during a reading time window to observe the oscillation of the measurement inductor.

The reading instant of the dampened oscillation of the measurement coil is chosen at a characteristic point wherein the combined effects of reducing Q and increasing the inductance cause a similar reduction of the instantaneous amplitude for different ferromagnetic and nonferromagnetic metals.

## Description

The present invention relates to an inductive sensor whose output is independent of the type of detectable metallic material. In particular, the inductive sensor according to the present invention is of the resonant circuit type.

Known inductive sensors use one or more coils to detect the presence of metallic materials.

Sensors with single coil are substantially based on the measurement of an electrical parameter which is strongly dependent on the impedance value assumed by the coil as the distance varies and on the type of metal constituting the obstacle. These single coil sensors have the drawback of not being able to reach elevated activation distances, as they must base their performance on the stability in terms of temperature of the coil and the components used and/or on the characteristic of the components that have the task of compensating for the thermal creep.

Some known two-coil sensors use a measurement coil and a reference coil. The coils are constructed in a similar way to guarantee the same thermal behavior and the impedance of the measurement coil is compared to that of the reference coil so as to eliminate thermal instabilities as much as possible.

As is known, ferromagnetic materials determine large variations in the quality factor Q and small variations in the inductance of the coil, while the non-ferromagnetic materials determine large variations in the inductance of the coil and small variations in the quality factor. In known devices, in practice, the variations in inductance and the quality factor of the measurement coil are observed: the variations in inductance lead to phase and frequency variations, while the variations in the quality factor determine variations in the signal amplitude.

The relative variation of the two parameters can be elaborated to determine the type of metal or to extract a parameter which is dependant only on the distance and independent of the type of metal which constitutes the obstacle.

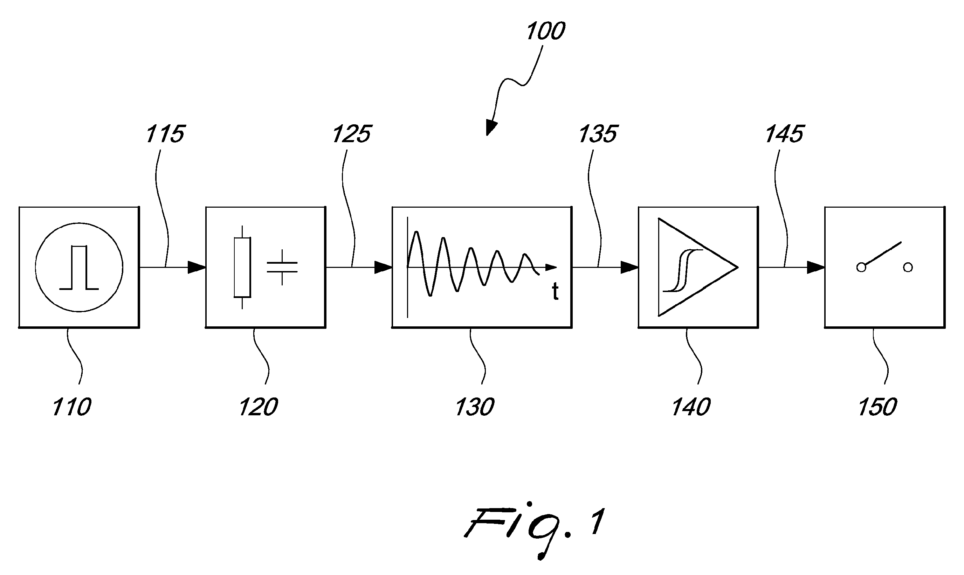

In particular, in EP 1530064 A1 a circuit is disclosed which is adapted to detect the presence of a metallic obstacle at a same activation distance, independently of the ferrous or nonferrous nature of the material of the obstacle. In particular, with reference to Figure 1, the known circuit 100 comprises a generator 110 of pulses 115 which is connected to the input of a single parallel LC circuit 120, whose output 125 is sampled periodically by a microcontroller 130 at a preset instant. The sample value 135 is fed to the input of a comparator 140 that, based on the value, activates a breaker 150.

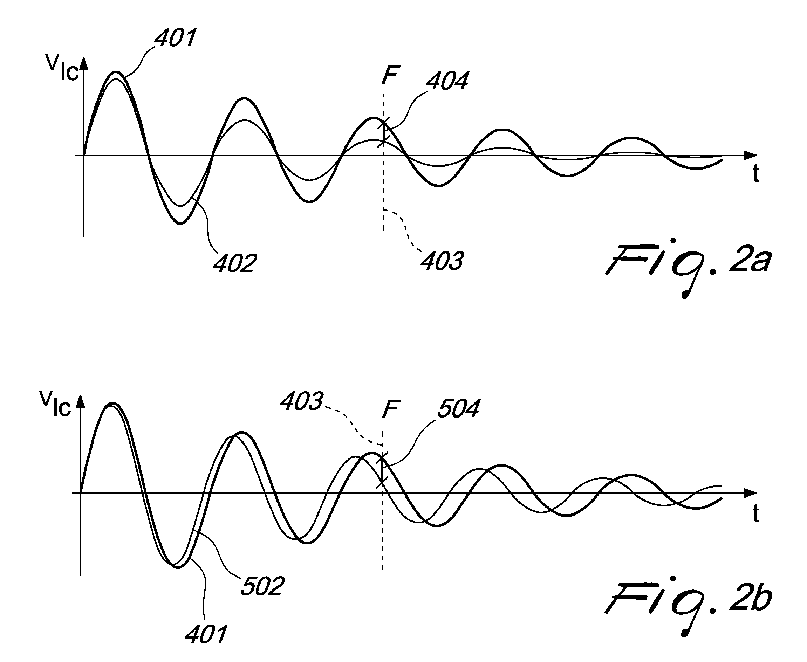

The preset instant F on which the sampling is performed, shown in Figures 2a and 2b, coincides with the instant in which the difference 404 between the amplitude of the response to the pulse 401 of the resonant circuit 120 in the absence of a metallic obstacle and the amplitude of the response to the pulse 402 of the circuit 120 in the presence of a ferromagnetic material which is arranged at a certain distance D is substantially equal to the difference 504 between the signal amplitude 401 and the amplitude of the response to the pulse 502 of the resonant circuit 120 in the presence of a nonferromagnetic obstacle which is arranged at the same distance D. Such instant F exists and it is possible to determine it mathematically or empirically.

One drawback of the known circuit of Figure 1 is that, in the embodiment using a single LC measurement circuit and a quartz oscillator to generate the clock of the system, it can have thermal creep problems of the inductor.

The aim of the present invention is to overcome the abovementioned drawbacks of the known art.

Within this aim, an object of the invention is to provide an inductive sensor to detect a metallic object that is independent of the type of material of the object and that allows for the reduction or cancellation of the thermal creep effects of the measurement coil.

Another object of the invention is to provide a sensor whose output is strongly independent of the type of material constituting the object without complex elaborations.

This aim and these and other objects that will become better apparent hereinafter, are achieved by a sensor according to claim 1.

Further characteristics and advantages of the invention will become better apparent from the following detaled description of some preferred but not exclusive embodiments of the sensor according to the invention, illustrated by way of a non-limitative example in the accompanying drawings, wherein:
Figure 1 is a view of an inductive sensor of a known type;
Figures 2a and 2b show the responses to the pulses of the circuit of Figure 1 in the presence of metallic obstacles which are ferromagnetic and nonferromagnetic respectively;
Figure 3 is a view of the inductive sensor according to a first embodiment of the invention;
Figure 4 is a view of the inductive sensor according to a second embodiment of the invention;
Figure 5 is a view of the inductive sensor according to a third embodiment of the invention;
Figure 6 shows the path of the damped measurement sinusoids of the first embodiment, for copper obstacles arranged at two different distances;
Figure 7 shows the path of the damped measurement sinusoids of the third embodiment.

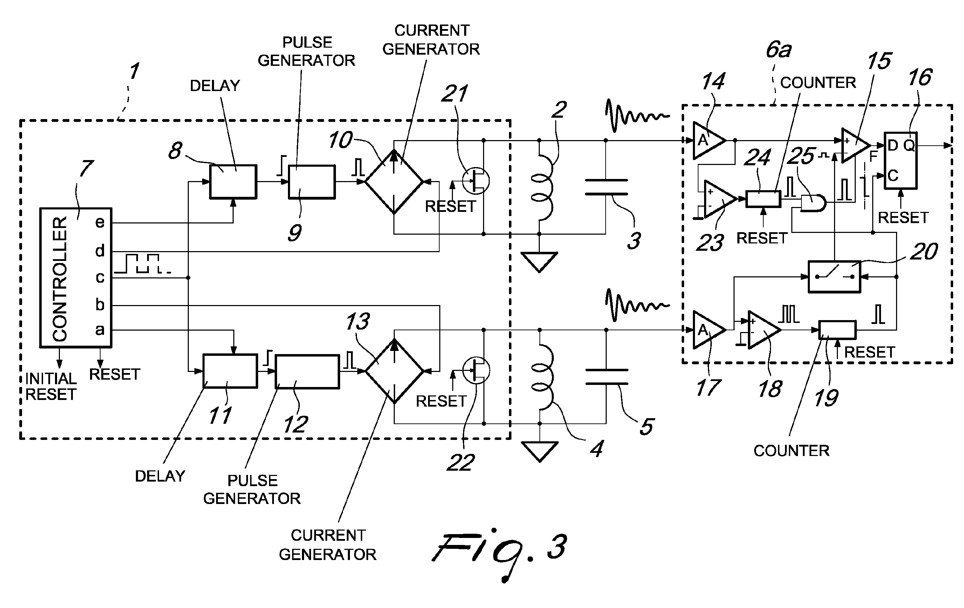

With reference to Figure 3, an inductive sensor according to the invention comprises a unit 1 for generating electrical pulses having at least two channels for transmitting the pulses, to independently excite corresponding resonant circuits which are connected to respective outputs of the pulse generation unit 1.

In particular, a resonant measurement circuit 2, 3 and a reference resonant circuit 4, 5 are provided both of which are of the LC type.

The resonant measurement circuit, for example of the parallel LC type, is arranged proximate to the active surface of the sensor, so that its impedance is strongly influenced by the approach of metallic bodies, and comprises a measurement inductor 2 and a first condenser 3 which is coupled to the measurement inductor 2.

Also the reference resonant circuit is of the LC type and comprises a reference inductor 4 which is coupled and preferably parallel to a second condenser 5 so as to form a parallel LC circuit. The reference inductor 4 is shielded at least partially, so as to be little or not influenced at all by the approach of metallic bodies to the sensor and to be able to rather faithfully follow the variations caused by ambient temperature on the measurement inductor 2.

The inductors 2 and 4 are identical and are made to operate at a frequency that is inferior to their autoresonance frequency, in particular at a frequency around which the characteristics of the inductance and the parasitic resistance associated with the inductor have a flow path that is substantially linear when the frequency varies.

Moreover, the inductors 2 and 4, preferably of the planar type and provided on a printed circuit board, can be arranged on planes that are substantially mutually orthogonal, so as to obtain the same thermal creep characteristics and the minimum electromagnetic coupling.

Downstream of the resonant circuits, the inductive sensor further comprises an evaluation unit, which is adapted to receive in input the responses of the resonant circuits, to periodically read the response of the measurement inductor 2 at a certain instant F of the sampling or during a certain time window around the instant F and to output a binary value (high/low) of activation or deactivation, based on the sample value.

The evaluation unit according to the invention is configured so as to generate a clock signal for the periodic sampling at instant F or during the time window around the instant F, based on the reference signal generated periodically by the resonant reference circuit. The reading instant F of the response of the measurement inductor 2 is found at a characteristic point at which a first amplitude of the measurement signal generated by the resonant measurement circuit in the presence of ferromagnetic material which is arranged at a distance from the sensor is substantially equal (or possibly different by less than 10%) to a second amplitude of the measurement signal generated in the presence of a nonferromagnetic material which is arranged at the same distance from the sensor.

The two channels of the pulse generator 1 are provided so as to excite the two resonant circuits with trains of excitation pulses that are possibly mutually phase shifted, with a phase shift comprised between zero and the maximum period of measurement oscillation, for example 500ns.

In the first embodiment of the invention, illustrated in Figure 3, the phase shift between the two trains of excitation pulses is chosen so that the sampling instant of the response from the measurement inductor 2 coincides with the passage for the value zero, in the descending phase, of a preset period of the response of the reference resonant circuit 4, 5. This period hereinafter is designated with the letter "n", corresponding to the number of the oscillation period referred to the initial instant of the response to the pulse of the reference resonant circuit 4, 5. Obviously, with "period" a pseudo-period is intended, since the response to the pulse of the LC reference circuit is a damped sinusoid in amplitude.

The amplitudes of the current pulses fed respectively to the two inductors 2 and 4 can be different. In particular, in terms of amplitude of the pulses of the measurement channel, which feed the measurement inductor 2, the highest possible is preferably chosen so that the amplitude of the first period of response to the pulse does not exceed the feeding tension. However, the amplitude of the pulses of the reference channel is chosen so that, in the response to the excitation pulse of the resonant reference circuit, the peak amplitude of the positive half-wave n, which immediately precedes the reading instant F (since in the instant F such half-wave will pass for zero) corresponds to a tension that is equal to the instantaneous tension assumed by the response of the resonant measurement circuit at the reading instant F in the presence of the obstacle at the activation distance, and therefore corresponds to the threshold of intervention.

To adjust the phase shifts and the desired amplitudes of the excitation pulse trains, the pulse generation unit 1 can comprise a controller 7 which is provided with a plurality of outputs **a-e.** The output **c** provides a periodic logic signal that is fed to both the measurement and reference channels and whose period corresponds to the sampling period of the evaluation unit 6a. The period of the logic signal on the output **c** can be much longer than the autoresonance period of the measurement circuits 2, 3 and of the reference circuits 4, 5; for example from 50 to 100 times longer, so as to allow a complete dampening of the oscillations in response to the pulse of the resonant circuits. In alternative, the period of the periodic logic signal generated by the controller 7 can also be inferior to 50 times the oscillation period of the response to the pulse of the resonant circuits, but in this case it is preferable to use circuits, here stylized as breakers 21, 22, to quickly and forcefully dampen the oscillations generated by the resonant circuits, as described below.

The outputs **a** and e provide an adjustment signal for the lateness of the pulses for the reference channel and the measurement channel, respectively, while the outputs **b** and **d** provide an adjustment signal for the amplitude of the pulses for the reference channel and the measurement channel, respectively.

The measurement channel of the pulse generation unit 1 comprises a first delay generator 8, which is adapted to output a delayed version of the periodic signal on the output **c** as a function of the delay adjustment signal on the output **e.**

A first pulse generator 9 is connected downstream of the first delay generator 8 and is adapted to generate a pulse at a rising edge or falling edge of the signal output from the delay generator 8.

Finally, the measurement channel comprises a first current generator 10, which is connected to the output of the pulse generator 9 and is adapted to generate a current pulse with a duration given by the pulse in output from the pulse generator 9 and with an amplitude which is defined by the amplitude adjustment signal on the output **d.**

The current generator 10 is connected in output to the resonant measurement circuit 2, 3 and can be provided with a first breaker 21, which is connected in parallel to the inductor 2 and is designed to quickly dampen the oscillating signal generated by the resonant measurement circuit.

The reference channel of the pulse generation unit 1 can comprise, for symmetrical reasons, the same components and the same functions as the measurement channel, i.e. a second delay generator (optional) 11, a second pulse generator 12 and a second current generator 13, the latter being optionally connected to a second breaker 22 for dampening the oscillating signal of the reference resonant circuit 4, 5.

The delay and amplitude signals provided on the outputs **a** and **b** of the controller 7, having the same function as the signals on the outputs **e** and **d** but respectively fed to the second delay generator 11 and to the second current generator 13, can assume different values with respect to the signals on the outputs **e** and **d.**

The described structure is only indicative, and has the aim of maintaining an elevated symmetry between the two channels and to use a controller that has limited timing resources and/or low speed.

The functions described can also be provided in a completely digital way as long as microcontrollers are used that are able to generate couple of pulses that are very close with respect to the oscillation period and to finely adjust amplitude, duration and reciprocal phase shifting.

Also the evaluation unit 6a comprises a measurement branch and a reference branch which are respectively connected downstream of the resonant measurement circuit 2, 3 and the reference resonant circuit 4, 5. These branches, however, are logically mutually connected so that the response from the measurement circuit 2, 3 can be read at the instant F wherein the two combined effects of reducing the quality factor and increasing the frequency of the measurement inductor 2 cause, with respect to the response of the reference resonant circuit, the same reduction or a similar reduction (for example, different by less than 10%) of the instantaneous amplitude of the response in the presence of different ferromagnetic and non ferromagnetic metals, which are arranged at the same distance from the measurement inductor 2.

To that end, the measurement branch of the evaluation unit 6a can comprise a first amplifier 14 which is adapted to amplify the oscillating response of the resonant measurement circuit 2, 3, which is also called measurement signal here. The input impedance of the amplifier 14 is chosen to be very high, so as to not influence the total impedance of the resonant circuits.

A second amplifier 17 can be provided on the reference branch to amplify, optionally with a different amplifying factor, the oscillating response of the reference resonant circuit 4, 5, which is also called reference signal here. The second amplifier 17 also has a very high input impedance.

A first comparator 15 is provided downstream of the first amplifier 14 and is adapted to compare the amplitude of the measurement signal, which is possibly amplified by the element 14, with the amplitude of the reference signal, which is possibly amplified by the element 17. The output of the comparator 15 (that can assume two values, high and low, according to the difference in amplitude between the two signals at its inputs) is connected at the input D of a flip-flop 16, which provides, at the output Q, the value which is present at the input D at the edge of the signal in the output c.

To perform the comparison between the measurement signal and the reference signal, the first comparator 15 comprises at least two inputs, of which one is connected to the output of the amplifier 14 and the other is connected to a device that stores the peak value of the oscillation period number n of the reference signal. To obtain this peak value, this device preferably comprises a first analogical sampler 20, that receives, at an input, the reference signal which is optionally amplified by the element 17 and at the other input receives a sampling pulse.

The sampling pulse is obtained by means of a second comparator 18 which has a cascade connection to a first counter 19.

The second comparator 18 is adapted to compare the amplitude of the reference signal which is optionally amplified with its average value and to thus provide a clock signal in output, corresponding to a clipped version of the reference signal.

The first counter 19 is connected to the output of the comparator 18 and is configured to provide at each pulse excitation the cycle number n of the clock signal output by the comparator 18.

This pulse, also called sampling pulse here, has a duration equal to the half-period of oscillation of the reference signal and is also fed to the clock C input of the flip-flop 16, so that its falling edge, for example, detects the above defined reading instant F and the flip-flop 16 provides the sample value at instant F the output Q.

The counter 19 is further connected to an input of the AND gate 25, so that it can receive the pulse generated by the counter 19.

The other input of the AND gate 25 is connected to the output of a second counter 24, which is adapted to generate in output a pulse that corresponds to the positive half-wave of the period number n of the measurement signal. To that end, a third comparator 23 is provided at the input of the counter 24, which is adapted to compare the measurement signal in output from the amplifier 14 with its average value, to generate a pulse train with periodicity that is equal to the oscillation period of the measurement signal and to provide this pulse train to the counter 24. The third comparator 23 is therefore configured for generating a clipped version of the measurement signal.

The output of the AND gate 25 is connected to an input for enabling the first comparator 15, so that the output of the comparator 15 is available only for the duration of the strobe pulse provided by the gate 25 following the AND operation between its two inputs described above.

The operation of the circuit of Figure 3 is as follows. For each pulse provided periodically by the unit 1, a measurement signal and a reference signal are respectively generated by the resonant circuits, and consist of dampened oscillating signals. These signals are converted into square waves and from these square waves the pulses corresponding to the period number n of the measurement and reference signals are taken by the evaluation unit 6a. An AND logic is operated on these two pulses at the gate 25, so that the comparator 15 provides the logic output only if the phase difference between the measurement and the reference is less than half a period.

In practice, this function enables the comparison of the instantaneous amplitude of the two specific positive half-waves of the period n of the measurement and reference signals only for small phase differences. This prevents the system from making errors in the interpretation of the distance of the obstacle in case metal obstacles are used with very high conductivity and resonant circuits with a very high quality factor. In fact, in this case the dampening in the amplitude of the measurement signal would be very small and the half-wave corresponding to the period n+1, successive to that given by the measurement, could have a peak amplitude that is only imperceptibly inferior to the preceding one.

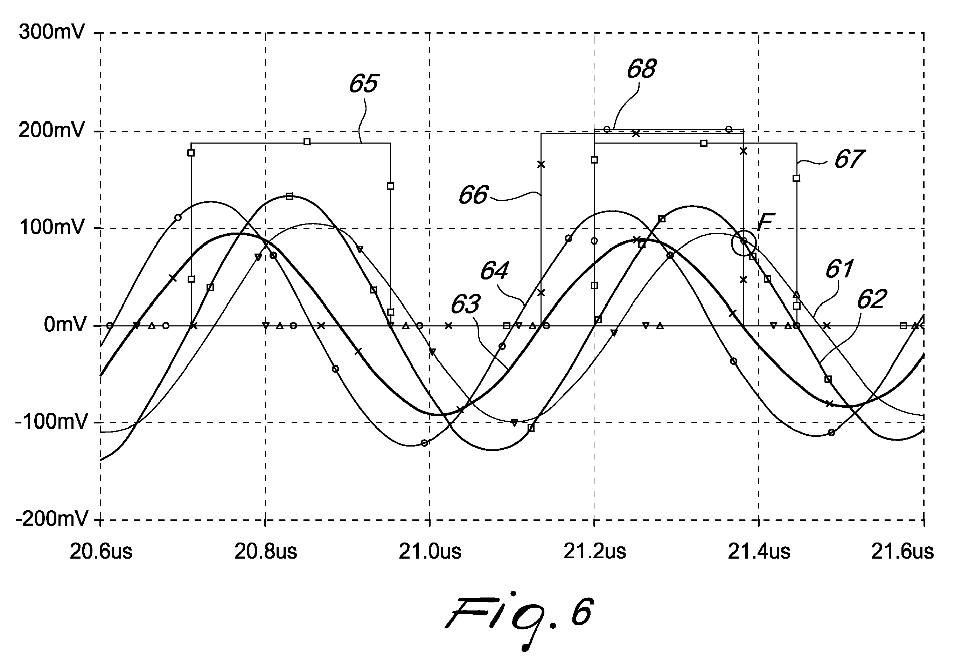

With reference to Figure 6, the curves 61 and 62 designate respectively the measurement signals in the presence of a steel obstacle and a copper obstacle, which are arranged at a first distance D1 from the inductor 2. Such signals, though having different module and phase, assume the same instantaneous value at the instant F, that is set to be at a certain oscillation period n.

In Figure 6, the curves 63 and 64 have also been designated, corresponding respectively to the reference signal and the measurement signal in the presence of the same copper obstacle which is arranged at a distance D2 which is inferior to the distance D 1 with respect to the inductor 2.

It can be noted that the clock pulses 65 and 66 provided by the comparator 18 have been represented and correspond to the periods n-1 and n of the reference signal. The reference numeral 67 designates the clock pulse number n generated by the counter 24, relative to the signal 62.

It can be noted that the logic AND between the n-th reference pulse 66 and the n-th measurement pulse 67 corresponds to the strobe pulse 68, which is present at the output of the AND gate 25 of Figure 3.

With the copper obstacle's progressive approach below the distance D2, the positive half-wave number n of the signal 62 slides to the left until the falling edge 67 coincides with the rising edge of the signal 66. Beyond this height, the strobe pulse 68 disappears and the comparator maintains the value L which has already been assumed, which means "close obstacle", even if subsequent positive half-waves of the measurement signal will assume instantaneous values that are greater than the reference value in the instant F.

The elements 23, 24 and 25 of Figure 3 thus have the function to enable, by means of the strobe pulse 68, the comparator 15 to provide an output H, which means "distant obstacle", only if the instantaneous value of the amplitude of the measurement signal is greater than the reference value and simultaneously the n-th reference and measurement positive half-waves have a set phase difference which is not greater than half an oscillation period.

When no obstacle is present the positive measurement half-wave n is expanded towards the right and has, at the instant F, an instantaneous value which is greater than the reference value, determining a correct reading state H.

The flip-flop 16, therefore, stores the state during the instant F and provides it digitally in output, so that it is available to then be processed by power circuits.

Beyond the sampling instant it is not necessary to allow the natural extinguishing of the signals. Consequently, the circuits 21 and 22 can be made to operate to accelerate the beginning of a new cycle.

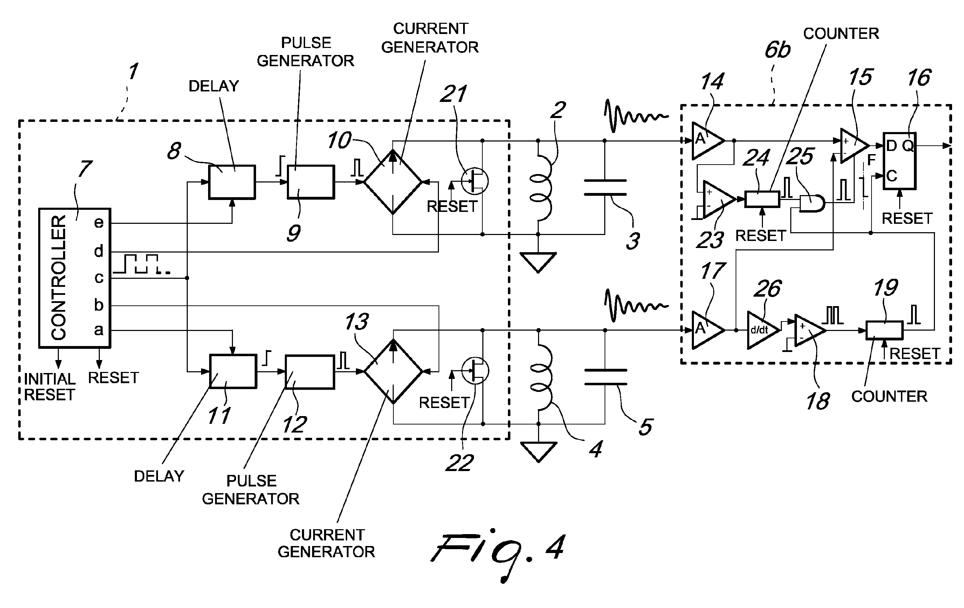

In the second preferred embodiment of the invention, illustrated in Figure 4, the evaluation unit 6b is modified with respect to that of Figure 3 but it contains the most part of the components used in the first embodiment, for which the same reference numerals have been maintained.

With reference to Figure 4, the reference signal is generated with a delay with respect to the measurement signal, and such delay is chosen so that the peak of the positive half-wave number n of the reference signal coincides with the sampling instant F of the measurement signal: in this case, the same instantaneous peak value of the sinusoid constitutes the reference value of the comparator 15. This allows not to store the value of the reference amplitude and to carry out the comparison of two signals in real time allowing for an efficient rejection of the internal common noise and a lower susceptibility to electromagnetic interferences.

To extract the edge that identifies the reading instant F, a shunt 26 is used at the output of the second amplifier 17, which is able to provide the derivative of the reference signal to the input of the comparator 18 that, as in the example of Figure 3, provides the clipped version of such derived signal. In this way, to the peak instant of the signal in input to the shunt 26 corresponds a path for the zero of the signal in output by the shunt 26.

The subsequent elaborations necessary for the generation of the edge F and the reading window corresponding to the n-th positive half-waves remain identical to those operated by the circuit of Figure 3. In fact, the output of the comparator 18 is provided to the counter 19, previously described, that will send the pulse number n of the derived signal to the AND gate 25 and to the input of the clock C of the flip-flop 16.

In the previous applications, the behavior of the dampened sinusoids were evaluated in a region which was relatively far from the origin, such origin corresponding to the instant of excitation, for example in a region comprised between 21µs and 22µs from the origin. In this temporal region, the approach of a metallic object towards the measurement coil from infinite to a few millimeters leads to a reduction of L and, therefore, an increase in frequency, which translates into a compression of the measurement sinusoid towards the origin so as to slide the measurement period n, in this case the 44th, for several periods earlier with respect to the same period n, of the reference sinusoid.

In a third preferred embodiment of the invention, a region which is relatively close to the origin of the response to the excitation pulse, for example to only 2.5µs, is observed. In this temporal region, the approach of a metallic obstacle towards the measurement coil from infinite to a few millimeters determines a sliding of the measurement period chosen (designated with "m" here), for example corresponding to the fifth period from the origin, of a quantity which is inferior to one half-period of the dampened reference sinusoid. It is noted that the sliding towards the origin of an m-th measurement period is the product between m and the reduction of the period caused by the reduction of L.

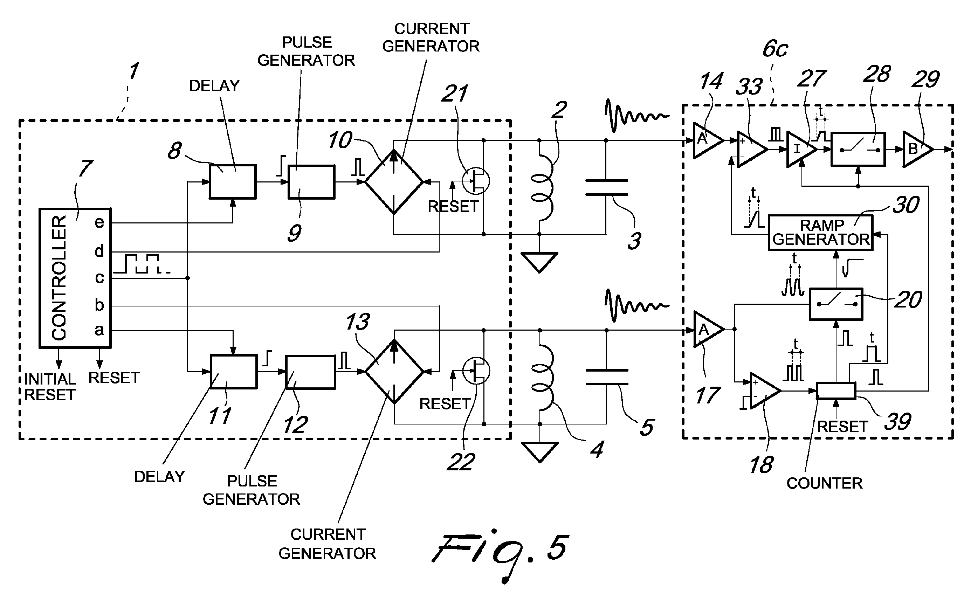

This embodiment is illustrated in Figure 5, wherein the corresponding components of Figure 3 have been designated with the same reference numerals.

The evaluation unit 6c has been modified with respect to that of the sensor of Figure 3 in the following way.

On the reference branch, the counter 19 has been substituted by the counter 39, which has three outputs: the first output is connected to the analogical sampler 20, the second output is connected to a ramp generator 30, the third output is connected to an integrator 27 and a second analogical sampler 28.

The counter 39 is configured to perform the count of the periods of the reference signal, through the pulses that it receives in input from the second comparator 18. Further, the counter 39 is configured to provide, at the output connected to the analogical sampler 20, a pulse with a width equal to the positive half-wave number m-1 of the train of pulses which are periodically received by the comparator 18, at the second output a pulse equal to the duration of the entire period m-th (i.e. from the end of the period m-1 to the end of the period m) and, at the third output, a pulse with a width equal only to the positive part of the period m of the train of pulses periodically arriving from the comparator 18. The numbers m and m-1 are pre-programmed in the counter 39 so that they correspond to that time window where it was decided to observe the responses to the pulse of the resonant reference and measurement circuits.

Considering the position of the time window, the cycle of the sensor according to the third embodiment of the invention can be made very brief using the breakers 21 and 22, i.e. closing them after the period m, so as to considerably anticipate the starting of a new cycle.

The analogical sampler 20 is connected to the ramp generator 30 and is configured to store the peak amplitude reached by the positive half-wave m-1 of the reference signal and to provide it to the ramp generator to set the charge current.

The ramp generator 30 is adapted to generate a ramp of a duration equal to the period m corresponding to the duration of the pulse at the second output of the counter 39 and maximum amplitude set by the amplitude provided by the analogical sampler 20.

On the measurement branch, there is a fourth comparator 33 whose inputs are connected, respectively, to the output of the first amplifier 14 and to the output of the ramp generator 30. The comparator 33, thus, compares the amplified measurement signal to the ramp provided by the generator 30 and produces a pulse in output that, observed by a logical AND with the third output of the counter 39, has a length that varies according to the distance of the metallic object from the measurement inductor 2, but is independent from the material of the object.

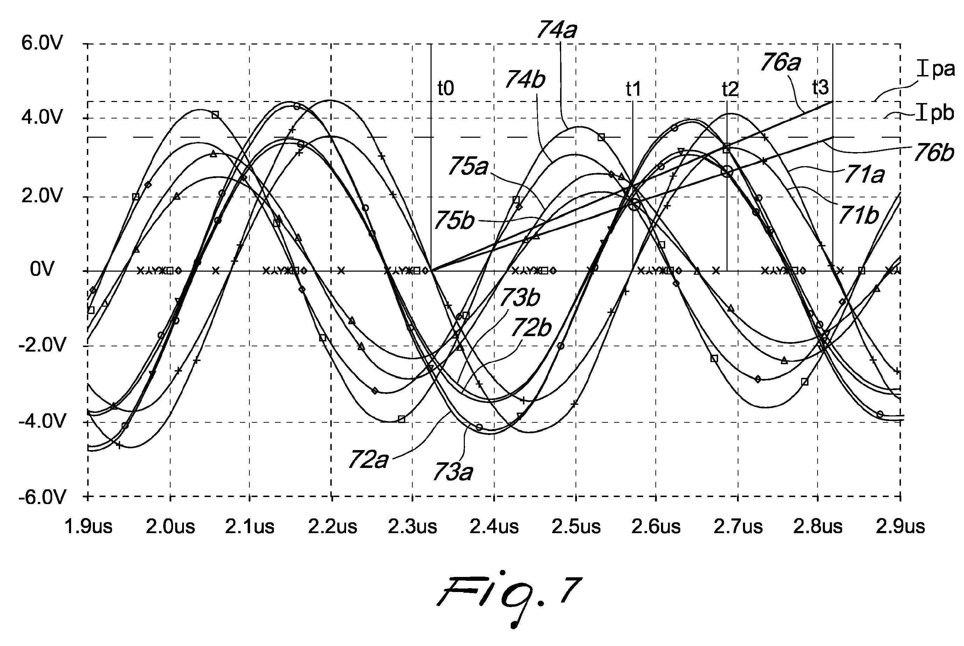

The output of the comparator 33 is connected to the integrator 27 that transforms the width of the useful part of the pulse coming from the comparator 33 in a current or tension value, according to the implementation of the integrator 27. The integration of the pulse is made on the interval defined by the third signal at the output of the counter 39 which is connected to the integrator 27, i.e. on the interval t1-t3 shown in Figure 7, described below.

The integrator 27, which is connected to the input of the second analogical sampler 28, thus provides, as a result of the integration, a signal whose amplitude is defined at the second sampler 28, which will pick it up and store it for an entire cycle in an output buffer 29. Obviously, the value sampled by the component 28 will be updated at every measurement cycle, i.e. at each excitation pulse sent to the resonant LC circuits of the sensor.

By way of such configuration of the evaluation unit 6c it is possible to obtain a sensor whose analogical output is strongly independent of the type of material constituting the metallic object and can be used within a preset interval of distances between the metallic object and the measurement inductor 2.

To better understand the principle on which the sensor of Figure 5 is based, reference can be made to Figure 7, where the measurement and reference signals are shown and are comprised in the time window that shows the periods number m-1 and m of the reference signal, for two different values Ipa>Ipb of amplitude of the excitation pulses of the resonant circuits, for two different metallic materials of the obstacle (copper and steel) and for two different distances of the metallic obstacle from the resonant measurement circuit.

Considering the curves with the letter "a" relative to the pulse amplitude Ipa (the same goes for the amplitude Ipb and the curves designated with the letter "b") an entire period number m of the reference signal 71a can be detected from Figure 7, comprised within the time window t0-t3. In the same time window, the ramp 76a provided by the ramp generator 30 has also been drawn: such ramp, as previously mentioned, has a maximum amplitude that is equal to the peak amplitude of the positive half-wave of the preceding period number m-1 and a duration t3-t0 equal to the duration of the period m.

Figure 7 also shows the measurement signals 72a and 73a relative to an object in copper and one in steel, respectively, which are arranged alternately at a same maximum distance D1 from the measurement inductor 2, for example at 12mm.

Moreover, in Figure 7 measurement signals 74a and 75a can be noted which are relative to the same two objects, respectively in copper and in steel, put alternately at a same distance D2 from the inductor 2, which is inferior to the distance D1 (for example at 3mm).

The ramp 76a intercepts, at the instants t1 and t2, the intersection points of the curves 74a-75a and the curves 72a-73a, respectively. These points identify the sampling instants F previously defined, in which the two combined effects of reducing the quality factor and increasing the frequency of the measurement inductor 2 cause, with respect to the reference signal 71a, the same reduction or optionally a similar reduction (for example, different by less than 10%) of the instantaneous amplitude of the measurement signal in the presence of different ferromagnetic and non ferromagnetic metals, which are arranged at the same distance from the measurement inductor 2. The choice of copper and steel for the obstacles used in the example of Figure 7 has been made because the first one provides, among the various nonferromagnetic materials, the highest increase in frequency of the measurement signal, while the second one causes, among the various ferromagnetic materials, the highest reduction of the amplitude of the measurement signal.

As can be noted by a comparison of the curves 72a-73a relative to the amplitude Ipa with the curves 72b and 73b relative to the amplitude Ipb in the graph of Figure 7, the intersection points "F" can be found on the same vertical lines corresponding to the instants t1 and t2 with the variation of the amplitude from Ipa to Ipb of the excitation pulses of the inductors. This shows that, if the peak amplitude parameters of the period m-1 of the wave shape of the reference signal 71 are used to generate the comparison ramp 76 making it begin at the instant t0 corresponding to the beginning of the period m, so as to obtain a maximum tension value in t3, corresponding at the end of the period m, which corresponds to the peak value assumed by the reference signal 71 in the preceding period m-1, a considerable insensitiveness to the common creep factors, thermal or constructive, of the various components is obtained.

In practice, it has been found that the device according to the invention completely achieves the intended aim and objects, a sensor being provided which is insensitive to the thermal and constructive creep of its components and whose activation distance is insensitive to the type of metallic material. This aim is achieved particularly by taking advantage of a reference signal which corresponds to the response that the resonant measurement circuit would have in the absence of metallic objects, and by determining the sampling instants based on this reference signal, that will follow the measurement signal in the presence of unforeseeable environmental variations.

The device, thus conceived, is susceptible of numerous modifications and variations, all of which are within the scope of the appended claims; further, all the details may be replaced with other technically equivalent elements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An inductive sensor whose output is independent of the type of detectable metallic material, comprising:
- a resonant LC measurement circuit (2, 3), arranged proximate to a surface of the sensor so that the impedance of the resonant circuit can be influenced by the presence of metallic objects that lie outside the sensor;
- a unit (1) for generating electrical excitation pulses, which is connected to the resonant measurement circuit (2, 3), said pulse generation unit (1) comprising a measurement channel which is configured to provide periodically electrical excitation pulses to the resonant measurement circuit (2, 3), so as to excite periodically the resonant measurement circuit; and
- an evaluation unit (6a, 6b, 6c), which is connected downstream of the resonant measurement circuit and is configured to perform a periodic sampling of a measurement signal generated periodically by the resonant measurement circuit in response to the excitation pulses, **characterized in that**:
- said sensor comprises a reference resonant LC circuit (4, 5), which is shielded or arranged in the sensor so that its impedance substantially cannot be influenced by the presence of said external metallic objects;
- said pulse generation unit (1) comprising a reference channel and being connected, by way of said reference channel, to the reference resonant circuit (4, 5), said reference channel being configured to provide periodically electrical excitation pulses to the reference resonant circuit (4, 5), said excitation pulses of the reference channel having the same period of repetition as the excitation pulses of the measurement channel;
- said evaluation unit (6a, 6b, 6c) being connected downstream of the reference resonant LC circuit (4, 5) and being configured so as to generate a clock signal for said periodic sampling, on the basis of the reference signal generated periodically by the reference resonant circuit in response to the excitation pulses of the reference channel, said periodic sampling being performed periodically at a preset sampling instant, stored in the evaluation unit (F), at which a first amplitude of the measurement signal generated in the presence of a ferromagnetic material arranged at a distance from said sensor is substantially equal to a second amplitude of the measurement signal generated in the presence of a nonferromagnetic material arranged at the same distance from the sensor.

2. The sensor according to claim 1, wherein said pulse generation unit (1) comprises means for phase shifting the excitation pulses of said measurement channel with respect to the excitation pulses of said reference channel, the phase shift being such that said sampling instant (F) of the measurement signal occurs at a zero of a preset period n of the reference signal.

3. The sensor according to claim 2, wherein the amplitude of the excitation pulses of the reference channel is such that, in the reference signal, the peak amplitude of the positive half-wave that directly precedes the sampling instant is equal to the instantaneous amplitude assumed by the measurement signal at the sampling instant in the presence of a metallic object arranged at said activation distance.

4. The sensor according to claim 1, wherein the pulse generation unit (1) comprises a controller (7) provided with an output for a periodic logic signal, which is connected to the measurement and reference channels, said logic signal having an oscillation period that corresponds to a sampling period of the evaluation unit (6a, 6b, 6c).

5. The inductive sensor according to claim 1, wherein said evaluation unit (6a, 6b, 6c) comprises a measurement branch which is connected to said resonant measurement circuit and a reference branch which is connected to said reference circuit and to said measurement branch, the measurement branch comprising a first comparator (15) which has at least two inputs, of which one is connected to the resonant measurement circuit to receive said measurement signal and the other input is connected to a device (18, 19, 20) which is connected to the reference resonant circuit and is configured to provide the first comparator (15) with the maximum amplitude value of the reference signal at said preset period n, said first comparator (15) being configured to compare the signals on said two inputs of the first comparator (15).

6. The sensor according to claim 5, wherein said device (18, 19, 20) comprises a first means (18, 19) for clipping the reference signal, so as to obtain a square wave that defines said clock signal, said first means (18, 19) being further configured to extract the n-th pulse from said clock signal.

7. The sensor according to claim 6, wherein said measurement branch comprises a second means (23, 24, 25) for clipping the measurement signal, so as to obtain a measurement square wave, said second means (23, 24, 25) being further configured to extract the n-th pulse of said measurement square wave, perform a logic AND operation between the n-th pulse of the measurement square wave and the n-th pulse of the clock signal and enable said first comparator (15) to perform said comparison only for the duration of the pulse that is the result of said AND operation.

8. The sensor according to claim 7, wherein the excitation pulses of said measurement channel are phase shifted with respect to the excitation pulses of said reference channel, the phase shift being such that said sampling instant (F) of the measurement signal occurs at a maximum positive of a preset period n of oscillation of the reference signal, the reference branch of the evaluation unit (6b) comprising a derivative circuit (26) for phase-shifting said clock signal by half of the oscillation period with respect to the reference signal.

9. The sensor according to claim 1, wherein said evaluation unit (6c) comprises and stores a number m, m-1 of oscillation period of the reference signal which corresponds to a time window in which the measurement signals of the measurement resonant circuit subjected to the presence of metallic objects made of different materials and arranged within a predefined interval of distances from the measurement resonant circuit have phase shifts that are smaller than one half-period of oscillation of the reference signal.

10. The sensor according to claim 9, wherein said evaluation unit (6c) comprises:
- ramp generation means (18, 39, 20, 30), which are configured to generate a ramp signal at said time window,
- a fourth comparator (33), which has at least two inputs, of which one input is connected to the measurement resonant circuit to receive said measurement signal and the other input is connected to said ramp generation means (18, 39, 20, 30), so as to receive said ramp signal and compare it with said measurement signal;
- an integrator (27), which is connected downstream of the third comparator (33), in order to integrate the signal in output from the fourth comparator (33) in a time interval that is equal to the span of said time window.
